# EUROPEAN PATENT APPLICATION

(11) **EP 4 822 782 A1**
(43) Date of publication of application: **14.10.2026**
(21) Application number: 25886179.8
(22) Date of filing: 18.09.2025
(51) Int. Cl.: H01M 4/525, H01M 4/505, H01M 4/131, H01M 10/054, C01G 53/50, H01M 4/02

(54) **CATHODE ACTIVE MATERIAL FOR SODIUM SECONDARY BATTERY, PREPARATION METHOD THEREFOR, AND SODIUM SECONDARY BATTERY COMPRISING SAME**

(30) Priority: 31.10.2024 KR 20240151918
(71) Applicant: EcoPro BM Co., Ltd, Cheongju-si, Chungcheongbuk-do 28116 (KR)
(72) Inventor: PARK, A Ram, Cheongju-si Chungcheongbuk-do 28116 (KR); JUNG, Kuhyun, Cheongju-si Chungcheongbuk-do 28116 (KR); HEO, Seungwoo, Cheongju-si Chungcheongbuk-do 28116 (KR); LEE, Dongwook, Cheongju-si Chungcheongbuk-do 28116 (KR)
(74) Representative: Beck & Rössig European Patent Attorneys
(86) International application number: PCT/KR2025/014519
(87) International publication number: WO 2026/095348

(57) **Abstract**

One embodiment of the present invention provides a positive electrode active material for a sodium secondary battery, comprising a sodium composite transition metal oxide including sodium (Na) and transition metals comprising nickel (Ni), copper (Cu), M1, and M2, wherein, in the composite transition metal oxide, M1 and M2 are different metals from each other and are each manganese (Mn), iron (Fe), or cobalt (Co), and wherein the sodium composite transition metal oxide comprises single crystals and satisfies Relation Formula 1.

## Description

### [Technical Field]

The present invention relates to a cathode active material for sodium secondary battery, preparation method therefor, and sodium secondary battery comprising same.

### [Background Art]

As demand for lithium-ion secondary batteries, which have been widely used as energy storage devices in various electronic technology fields, rapidly increases, sodium-ion secondary batteries have attracted attention as alternatives to lithium, which is an expensive metal.

Since sodium-ion secondary batteries have an operating principle of an intercalation/deintercalation reaction similar to that of lithium-ion secondary batteries, they are one of the next-generation materials having high potential for application to secondary batteries. However, sodium-ion secondary batteries exhibit lower performance in terms of capacity, life characteristics, rate capability, and the like than lithium-ion secondary batteries. Therefore, development of positive electrode active materials having high performance is required for commercialization.

Layered transition metal oxides having a simple structure, excellent electrochemical performance, and facile synthesis are used as positive electrode active materials for sodium-ion secondary batteries. Layered transition metal oxides are generally classified into O3-type and P2-type according to crystal structure. Positive electrode active materials based on an O3-type structure have a composition represented by Nax(TM)O2 (2/3 < x ≤ 1), whereas positive electrode active materials based on a P2-type structure have a composition represented by Nax(TM)O2 (x ≤ 2/3).

In general, P2-type layered oxides have relatively excellent cycle stability, but have aspects in which commercial application is difficult due to disadvantages such as relatively low energy density resulting from a low sodium content. As an alternative, O3-type layered oxides have higher energy density than P2-type layered oxide particles, but have a disadvantage of poor cycle stability because they cause larger structural changes during charge/discharge processes. It is analyzed that the cause of such main problems is that gas generation is large due to side reactions with an electrolyte solution during repeated charge/discharge at high temperatures, and volume changes of particles are large because the crystal structure is unstable.

Conventionally, in order to solve the above-described problems of the O3-type layered oxide, techniques of doping with various metal elements or coating particle surfaces have generally been applied. However, polycrystalline particles constituting the layered oxide are provided with a large surface area that reacts with an electrolyte solution at grain boundaries or pores inside the particles, thereby deteriorating electrochemical performance.

In Patent Document 1 (Chinese Patent Publication No. CN 117457895 A), a positive electrode material forms a single-crystal morphology in which primary particles are directionally grown by introducing a Cu dopant element. However, the particle size of the single crystals is not sufficiently large to adequately improve press density (PD), and excessive Cu doping causes deterioration of capacity characteristics.

Patent Document 2 (Korean Patent Application Publication No. KR 10-2024-0011099 A) provides a sodium-ion positive electrode material having a single-crystal form by doping an M element into a specific chemical composition. Although M dopant elements such as Zn, Sr, Zr, Ti, K, Cu, W, Al, Nb, and Mo are used in an amount of 0.1 to 6 mol%, the D50 particle diameter of the single-crystal structure is 3 to 6 µm. Therefore, similar to Patent Document 1, the particles have a small particle diameter, and the effect of improving press density is not sufficient.

### [Disclosure of Invention]

### [Technical Problem]

An object of the present invention is to suppress gas generation caused by electrolyte side reactions during high-temperature operation through single-crystallization of a positive electrode active material for a sodium-ion secondary battery. Specifically, by using a large-particle-diameter single-crystal positive electrode active material, internal pores in conventional polycrystalline particles may be reduced, and an effect of improving press density (PD) may be obtained.

Another object of the present invention is to i) successfully achieve single-crystallization by applying an optimal transition metal composition, ii) increase the particle diameter of the single crystals to a large-particle-diameter level of 9 to 13 µm, and iii) minimize capacity loss caused by introduction of a dopant by using a relatively small amount of Cu.

In addition, when single-crystallization through Cu doping is applied, stability of the crystal structure is improved even during repeated charge/discharge cycles.

### [Technical Solution]

One embodiment of the present invention provides a positive electrode active material for a sodium secondary battery, comprising a sodium composite transition metal oxide including sodium (Na) and transition metals comprising nickel (Ni), copper (Cu), M1, and M2, wherein, in the composite transition metal oxide, M1 and M2 are different metals from each other and are each manganese (Mn), iron (Fe), or cobalt (Co), and wherein the sodium composite transition metal oxide comprises single crystals and satisfies the following Relation Formula 1:

[Relation Formula 1] $0.8 \leq D / C \left(μm/at mol%\right) \leq 1.6$

In Relation Formula 1,
D is an average particle diameter (D50) of the single crystals, and C is a copper content (atomic mol%) based on total metals excluding sodium in the composite transition metal oxide.

The sodium composite transition metal oxide has an O3-type crystal structure, a total amount (M) of nickel (Ni) and copper (Cu) is 30 to 35 at mol% based on total metals excluding sodium, and a ratio (M1/M) of a content of M1 to the total amount (M) of nickel and copper and a ratio (M2/M) of a content of M2 to the total amount (M) of nickel and copper may each be 0.85 to 1.20.

The sodium composite transition metal oxide may be such that a total amount of nickel (Ni) and copper (Cu) is 30 to 35 at mol% based on total metals excluding sodium, the copper is substituted into a transition metal layer, and a content of the copper is 10 to 35% based on a total amount of nickel and copper of 100 at mol%.

The sodium composite transition metal oxide may comprise a compound represented by the following Chemical Formula 1:

[Chemical Formula 1] Naₐ(Ni_{x-b}Cu_{b}M1_{y}M2_{z}M3ᵥ)O₂

wherein, in Chemical Formula 1,
M1, M2, and M3 are different elements from one another,
M1 and M2 are each Fe, Mn, or Co,
M3 is at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd,
0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

The sodium composite transition metal oxide may comprise a compound represented by the following Chemical Formula 2:

[Chemical Formula 2] Naₐ(Ni_{x-b}Cu_{b}Fe_{y}Mn_{z}M3ᵥ)O₂

wherein, in Chemical Formula 2,
M3 is at least one selected from the group consisting of Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd,
0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

The sodium composite transition metal oxide may comprise single crystals having an average particle diameter (D50) of 9 to 15 µm.

The positive electrode active material may have a press density (PD) of 2.85 to 3.05 g/cm³, and a volume change ratio after 300 charge/discharge cycles may be less than 3.5%.

Another embodiment of the present invention provides a method of preparing a positive electrode active material for a sodium secondary battery, comprising: a process of mixing a transition metal hydroxide precursor comprising nickel (Ni), copper (Cu), M1, and M2 with a sodium compound; and a heat-treating process of heat-treating the mixture to prepare sodium composite transition metal oxide single crystals satisfying the following Relation Formula 1:

[Relation Formula 1] $0.8 \leq D / C \left(μm/at mol%\right) \leq 1.6$

In Relation Formula 1,
D is an average particle diameter (D50) of the single crystals, and C is a copper content (atomic mol%) based on total metals excluding sodium in the composite transition metal oxide.

The transition metal hydroxide precursor may have an average particle diameter (D50) of 4 to 7 µm, and the heat-treating may be performed to satisfy the following Relation Formula 2:

[Relation Formula 2] $2 \leq P 2 / P 1 \leq 4$

In Relation Formula 2,
P1 is an average particle diameter (D50) of the transition metal hydroxide precursor, and P2 is an average particle diameter (D50) of the sodium composite transition metal oxide.

The heat-treating process may be a process of heat-treating the mixture at 900 to 1,000°C for 5 to 20 hours.

Another embodiment of the present invention provides a positive electrode for a sodium secondary battery, comprising the positive electrode active material.

Another embodiment of the present invention provides a sodium secondary battery using the positive electrode.

### [Advantageous Effects]

In the present invention, a hydroxide precursor having a transition metal composition of Ni, Fe, Mn, and Cu is mixed with Na₂CO₃ and calcined at a high temperature to obtain a large-particle-diameter single-crystal positive electrode active material. Accordingly, an excellent effect in which gas generation is reduced and press density (PD) characteristics are improved may be obtained during evaluation of cycle life under high-temperature conditions.

According to the present invention, effects of reducing gas generation and improving press density (PD) are provided by single-crystallization and formation of large particles. In addition, by using an optimized transition metal composition and a relatively small amount of a Cu dopant, capacity loss is minimized and a volume change ratio of the positive electrode active material during charge/discharge is reduced, and by preparing large-particle-diameter single-crystal particles, an effect of reducing gas generation may be obtained.

### [Brief Description of Drawings]

FIG. 1 shows results of comparative analysis of initial discharge capacity of sodium secondary batteries using an NFM111 (NaNi_{0.33}Fe_{0.33}Mn_{0.33}O₂) positive electrode active material and an NFM424 (NaNi_{0.4}Fe_{0.2}Mn_{0.4}O₂) positive electrode active material.
FIGS. 2 to 4 are SEM (Scanning Electron Microscopy) images of positive electrode active materials according to Example 1 and Comparative Examples 1 and 2.

### [Mode for Carrying Out the Invention]

The advantages and features of the present invention, and methods for achieving the same, will become apparent with reference to embodiments described in detail below in conjunction with the accompanying drawings. However, the present invention is not limited to the embodiments disclosed hereinafter and will be embodied in various different forms. Rather, these embodiments are provided so that the disclosure of the present invention will be thorough and complete, and will fully convey the scope of the invention to those skilled in the art. The present invention is defined only by the scope of the claims.

Unless otherwise defined, all terms, including technical and scientific terms, used herein may be used as having meanings that can be commonly understood by those skilled in the art to which the present invention pertains.

Throughout the specification, when a part is referred to as "including" a certain component, it means that the part does not exclude other components and may further include other components, unless specifically stated otherwise.

As used herein, singular forms include plural forms unless the context clearly indicates otherwise.

As used herein, the expression "A to B" means "not less than A and not greater than B" unless otherwise specifically defined. Further, the expression "A and/or B" means at least one selected from the group consisting of A and B unless otherwise specifically defined.

Further, As used herein, when a part such as a layer, film, region, or plate is referred to as being "on" or "over" another part, this includes not only a case where the part is directly on the other part, but also a case where still another part is interposed therebetween.

One embodiment of the present invention provides a positive electrode active material for a sodium secondary battery. The positive electrode active material comprises a sodium composite transition metal oxide including sodium (Na) and transition metals comprising nickel (Ni), copper (Cu), M1, and M2, wherein M1 and M2 are different metals and are manganese (Mn), iron (Fe), or cobalt (Co).

Specifically, according to the present invention, by preparing a positive electrode active material in a large-particle-diameter single-crystal form by mixing a transition metal hydroxide precursor having a specific composition with a sodium compound and heat-treating the mixture at a high temperature, there is an effect of improving press density (PD), side reactions with an electrolyte solution are suppressed, gas generation may be reduced, and there is an effect of improving life characteristics.

The sodium composite transition metal oxide comprises single crystals and satisfies the following Relation Formula 1:

[Relation Formula 1] $0.8 \leq D / C \left(μm/at mol%\right) \leq 1.6$

In Relation Formula 1, D is an average particle diameter (D50) of the single crystals of the sodium composite transition metal oxide, and C is a copper content (atomic mol%) based on total metals excluding sodium in the composite transition metal oxide.

Specifically, the positive electrode active material may have a D/C value of 1 to 2 µm/at mol%, 1 to 1.5 µm/at mol%, 1 to 1.3 µm/at mol%, or 1 to 1.2 µm/at mol%.

According to the present invention, when the Cu doping content increases within a predetermined range in a specific transition metal composition, a threshold value (maximum value) of the average particle diameter of the single crystals may appear. Accordingly, large-particle-diameter single crystals may be obtained while minimizing capacity loss caused by introduction of the dopant by using a relatively small amount of Cu. In contrast, when the D/C value is less than the lower limit, the Cu doping content may be excessive, and capacity characteristics may deteriorate. When the D/C value exceeds the upper limit, a small-particle-diameter single-crystal positive electrode active material or polycrystalline particles are obtained, and thus side reactions with an electrolyte solution increase and press density may deteriorate.

Meanwhile, positive electrode active materials are classified into single-crystalline positive electrode active materials and polycrystalline positive electrode active materials according to crystal structure. Here, a single-crystalline positive electrode active material is a material in which various metals such as nickel, iron, and manganese constitute a single particle, whereas a polycrystalline positive electrode active material has a multi-particle (secondary particle) structure in which single particles (primary particles) are aggregated. In addition, according to particle size, the positive electrode active material of the present invention may comprise a large-particle-diameter single-crystal positive electrode active material among small-particle-diameter materials having a particle diameter of 5 µm or less and large-particle-diameter materials having a particle diameter greater than 5 µm, specifically 10 to 20 µm. Further, based on the total number of particles of the sodium composite transition metal oxide, the positive electrode active material may comprise the large-particle-diameter single-crystal particles in an amount of greater than 50%, greater than 60%, 70 to 100%, or preferably 80 to 100%.

Meanwhile, analysis of large-particle single-crystal particles or small-particle polycrystalline particles may be performed using a transmission electron microscope (TEM), a scanning electron microscope (SEM), or the like, but is not necessarily limited thereto.

In one embodiment, the sodium composite transition metal oxide may comprise single crystals having an average particle diameter (D50) of 9 to 15 µm. For example, the D50 may be 10 to 15 µm, 11 to 15 µm, or 12 to 14 µm.

Specifically, based on the total number of particles of the sodium composite transition metal oxide, the positive electrode active material may comprise the single-crystal particles having the D50 value in an amount of greater than 50%, greater than 60%, 70 to 100%, or preferably 80 to 100%.

Meanwhile, the particle size distribution of the sodium composite transition metal oxide may be measured using a laser diffraction method. For example, after dispersing the single-crystal particles in a dispersion medium, the particles may be introduced into a commercially available laser diffraction particle size analyzer (for example, Microtrac MT 3000), irradiated with ultrasonic waves at about 28 kHz and an output of 60 W, and a cumulative volume particle size distribution curve may be obtained. Thereafter, a particle size corresponding to 50% of the cumulative volume may be calculated.

Herein, the particle size corresponding to 50% of the cumulative volume is defined as the average particle diameter (D50). Further, the particle size corresponding to 50% of the cumulative volume in the cumulative volume particle size distribution curve obtained by laser diffraction particle size distribution measurement is defined as D50.

The positive electrode active material may have a press density (PD) of 2.85 to 3.05 g/cm³. For example, the press density may be 2.9 to 3.05 g/cm³, 2.9 to 3.0 g/cm³, or 2.95 to 3.0 g/cm³. Further, a volume change ratio after 300 charge/discharge cycles may be less than 3.5% or 3.0% or less. For example, the volume change ratio may be 1 to 3.5% or 1 to 3.0%.

Meanwhile, the press density (PD) measurement method is a method of introducing a positive electrode active material sample into a press apparatus, applying a force of 2.5 tons to prepare the positive electrode active material in the form of a pellet, and measuring the density. However, the present invention is not necessarily limited thereto.

Further, the volume change ratio after 300 charge/discharge cycles is calculated as a percentage of a volume change ratio of a cell volume (V300), measured after performing 300 charge/discharge cycles (25°C, 1.5 V to 4.0 V, 0.5 C/0.5 C), with respect to an initial volume (V1) of a cell, measured after preparing a sodium secondary battery prepared using the positive electrode active material as a pouch-type cell, performing at least three formation processes (25°C, 1.5 V to 4.0 V, 0.1 C/0.1 C), and performing one degassing process. However, the present invention is not necessarily limited thereto.

In one embodiment, the sodium composite transition metal oxide may have an O3-type crystal structure. A total amount (M) of nickel (Ni) and copper (Cu) may be 30 to 35 at mol% based on total metals excluding sodium (100 at mol%), and a ratio (M1/M) of a content of M1 to the total amount (M) of nickel and copper and a ratio (M2/M) of a content of M2 to the total amount (M) of nickel and copper may each be 0.85 to 1.20.

When M1/M and M2/M are less than the designed ranges, Cu may replace M1 and M2 (Mn, Co, or Fe), and thus, even during high-temperature heat treatment, growth may proceed in the form of quasi-single crystals or polycrystals rather than in the form of single crystals, which may be disadvantageous in terms of particle growth. Further, because Cu is used in an excessive amount and synthesis is performed at a high temperature, single-crystallization easily occurs and the particles may be grown to a large particle diameter; however, capacity characteristics and life characteristics deteriorate. Since Cu is a material having a flux effect and can coarsen primary particles even in a small amount, excessive use of Cu may not be desirable.

The copper is substituted into a transition metal layer, and the content of the copper may be 10 to 35%, for example, 15 to 35%, 20 to 35%, 25 to 35%, or 30 to 35%, based on a total amount of nickel and copper (100 at mol%). When the content of Cu replacing Ni is less than 10%, it is difficult to obtain a large-particle-diameter one-body single form at the same temperature. Conversely, when the content of Cu replacing Ni exceeds 35%, there is a problem in that capacity characteristics and life characteristics deteriorate due to a decrease in Ni content.

In one embodiment, the copper may be included in an amount of greater than 3 at mol%, 5 to 15 at mol%, 7 to 15 at mol%, 7 to 13 at mol%, or 7 to 11 at mol%, based on total metals excluding sodium. By using a relatively small amount of Cu, large-particle single crystals may be obtained while minimizing deterioration in capacity and life characteristics caused by introduction of the doping metal.

In one embodiment, the sodium composite transition metal oxide may comprise a compound represented by the following Chemical Formula 1.

[Chemical Formula 1] Naₐ(Ni_{x-b}Cu_{b}M1_{y}M2_{z}M3ᵥ)O₂

wherein, in Chemical Formula 1, M1, M2, and M3 may be different elements from one another, M1 and M2 may each be Fe, Mn, or Co, M3 may be at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd, 0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

Specifically, the sodium composite transition metal oxide may comprise a compound represented by the following Chemical Formula 2.

[Chemical Formula 2] Naₐ(Ni_{x-b}Cu_{b}Fe_{y}Mn_{z}M3ᵥ)O₂

wherein, in Chemical Formula 2,
M3 may be at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd, 0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

The sodium (Na) is included in an amount of 0.8 to 1.2 moles based on 1 mole of the sodium composite transition metal oxide, and the composite particles are formed to have an O3 crystal structure. The composite transition metal oxide exhibits a high reversible capacity, but there is a problem in that limited sodium ions of the positive electrode material are consumed due to irreversible phase transitions, such as formation of a solid electrolyte interphase (SEI, CEI) film on the electrode surface during an initial charging process, thereby deteriorating the energy density and cycle stability of the secondary battery. Accordingly, according to the present invention, yttrium-doped sodium zirconium oxide coated on the positive electrode active material functions as a sacrificial positive electrode material, thereby improving the problem of sodium ion consumption during initial charging and providing additional capacity.

Another embodiment of the present invention provides a method for preparing a positive electrode active material for a sodium secondary battery.

The method comprises a process of mixing a transition metal hydroxide precursor containing nickel (Ni), copper (Cu), M1, and M2 with a sodium compound, and a process of heat-treating the mixture to prepare sodium composite transition metal oxide single crystals satisfying the following Relation Formula 1.

In one embodiment, in the mixing process, the transition metal hydroxide precursor and the sodium compound may be mixed such that Na/M (M = total metals excluding Na) is greater than 0.8 equivalents and less than 1.2 equivalents, and the mixing may be performed by a dry mixing method. In the dry method, the transition metal hydroxide precursor particles and the sodium compound may be uniformly mixed, and the problem of increased costs caused by process complexity in a wet method may be improved.

Further, M1 and M2 in the transition metal hydroxide precursor may be the same as described above, and the transition metal hydroxide precursor may comprise a compound represented by the following Chemical Formula 3 and/or Chemical Formula 4.

[Chemical Formula 3] Ni_{x-b}Cu_{b}M1_{y}M2_{z}M3ᵥ(OH)₂

wherein, in Chemical Formula 3, M1, M2, and M3 may be different elements from one another, M1 and M2 may each be Fe, Mn, or Co, M3 may be at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd, 0.30≤x≤0.35, 0.05≤b≤0.15, 0.20<x-b<0.30, 0.30≤y≤0.35, 0.30≤z≤0.35, 0≤v≤0.10, and x+y+z+v=1.

   [Chemical Formula 4] Ni_{x-b}Cu_{b}Fe_{y}Mn_{z}M3ᵥ(OH)₂
wherein, in Chemical Formula 4, M3 may be at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd, 0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

In one embodiment, the sodium compound may be at least one selected from the group consisting of Na₂CO₃, NaOH, NaNO₃, CH₃COONa, and Na₂(COO)₂, and preferably may be Na₂CO₃, NaOH, or a combination thereof.

In one embodiment, the transition metal hydroxide precursor may have an average particle diameter (D50) of 4 to 10 µm, for example, 4 to 7 µm. When a precursor having an average particle diameter (D50) exceeding 10 µm is used, prepared large-particle-diameter particles may be formed in a semi-single-crystal form in which a plurality of particles are aggregated. Therefore, although not necessarily limited thereto, it may be preferable to use a precursor having an average particle diameter (D50) of 4 to 7 µm.

In one embodiment, the heat-treatment process may be performed to satisfy the following Relation Formula 2. [Relation Formula 2] $2 \leq P 2 / P 1 \leq 4$

In Relation Formula 2, P1 may be an average particle diameter (D50) of the transition metal hydroxide precursor, and P2 may be an average particle diameter (D50) of the sodium composite transition metal oxide.

Specifically, the heat-treatment process may be a process of heat-treating the mixture at 900 to 1,000°C for 5 to 20 hours.

Meanwhile, particle size distributions of the transition metal hydroxide precursor and the sodium composite transition metal oxide may be measured using a laser diffraction method. For example, after dispersing the precursor particles and oxide particles, respectively, in a dispersion medium, the particles may be introduced into a commercially available laser diffraction particle size analyzer (for example, Microtrac MT 3000), irradiated with ultrasonic waves at about 28 kHz and an output of 60 W, and a cumulative volume particle size distribution curve may be obtained. Thereafter, a particle size corresponding to 50% of the cumulative volume may be calculated.

Here, the particle size corresponding to 50% of the cumulative volume is defined as the average particle diameter (D50). Further, the particle size corresponding to 50% of the cumulative volume in the cumulative volume particle size distribution curve obtained by laser diffraction particle size distribution measurement is defined as D50.

When the transition metal composition of the transition metal hydroxide precursor and the mixing ratio of the sodium compound are applied within preferred ranges in the present invention, there is an aspect in which large-particle-diameter single-crystallization becomes easier as the heat-treatment temperature increases within the above-described heat-treatment temperature range.

The prepared positive electrode active material may further undergo washing, filtration, and drying processes.

The positive electrode active material prepared by the method for preparing a positive electrode active material for a sodium secondary battery according to the present invention suppresses gas generation caused by side reactions with an electrolyte solution during high-temperature operation through single-crystallization. Specifically, by preparing a large-particle-diameter single-crystal positive electrode active material, internal pores present in conventional polycrystalline particles may be reduced, and an effect of improving press density (PD) may be obtained.

Another embodiment of the present invention provides a positive electrode for a sodium secondary battery comprising the positive electrode active material described above, and a sodium secondary battery.

The positive electrode may comprise a positive electrode current collector and a positive electrode active material layer disposed on the positive electrode current collector, wherein the positive electrode active material according to one aspect of the present invention is present in the positive electrode active material layer.

The positive electrode current collector is not particularly limited so long as it has conductivity without causing a chemical change in the battery. For example, the positive electrode current collector may be made of stainless steel, aluminum, nickel, titanium, calcined carbon, or aluminum or stainless steel surface-treated with carbon, nickel, titanium, silver, or the like. In addition, the positive electrode current collector may generally have a thickness of 3 to 500 µm, and fine surface irregularities may be formed on the surface thereof to improve adhesion of the positive electrode active material. The positive electrode current collector may be provided in various forms such as a film, sheet, foil, net, porous body, foam, or nonwoven fabric.

Further, the positive electrode active material layer may be a layer comprising the above-described positive electrode active material together with a conductive material and a binder.

Herein, the conductive material is used to impart conductivity to the electrode, and may be used without particular limitation so long as it has conductivity without causing a chemical change in the positive electrode active material. Non-limiting examples of the conductive material include graphite such as natural graphite and artificial graphite; carbon-based materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; and conductive polymers such as polyphenylene derivatives. The conductive material may generally be included in an amount of 1 wt% to 30 wt% based on the total weight of the positive electrode active material layer.

The binder is a material that serves to improve adhesion between positive electrode active material particles and adhesion between the positive electrode active material and the current collector. Non-limiting examples of the binder include polyvinylidene fluoride (PVDF), poly(vinylidene fluoride-co-hexafluoropropylene) (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene polymer (EPDM), sulfonated EPDM, styrene-butadiene rubber (SBR), fluororubber, and various copolymers thereof. The binder may generally be included in an amount of 1 wt% to 30 wt% based on the total weight of the positive electrode active material layer.

The positive electrode according to one embodiment of the present invention may be prepared according to a conventional method for preparing a positive electrode for a sodium secondary battery, except that the above-described positive electrode active material is used. For example, a slurry for forming a positive electrode active material layer comprising the positive electrode active material and, optionally, a binder and a conductive material may be coated onto a positive electrode current collector, followed by drying and rolling to prepare the positive electrode. According to another example, the slurry for forming the positive electrode active material layer may be cast onto a separate support, and then a film obtained by peeling the positive electrode active material layer from the support may be laminated onto the positive electrode current collector to prepare the positive electrode.

According to another aspect of the present invention, an electrochemical device comprising the above-described positive electrode is provided. The electrochemical device may specifically be a battery or a capacitor, and more specifically, a sodium secondary battery.

The sodium secondary battery comprises a positive electrode, a negative electrode disposed opposite the positive electrode, a separator interposed between the positive electrode and the negative electrode, and an electrolyte (electrolyte solution). In addition, the sodium secondary battery may comprise a battery case accommodating an electrode assembly including the positive electrode, the negative electrode, and the separator, and a sealing member for sealing the battery case.

Depending on the shape of the battery case, the sodium secondary battery may be classified into a can-type sodium secondary battery in which the electrode assembly is accommodated in a metal can, and a pouch-type sodium secondary battery in which the electrode assembly is accommodated in a pouch formed of a sheet such as an aluminum laminate.

In particular, in the case of a pouch-type sodium secondary battery using a positive electrode comprising the positive electrode active material according to various embodiments of the present invention, there is an advantage in that, as side reactions between the positive electrode active material and the electrolyte solution are less likely to occur, stability during storage and/or operation is improved and, at the same time, gas generation may be reduced.

Hereinafter, the present invention will be described in detail with reference to Examples. However, these Examples are provided only to further illustrate the present invention, and the scope of the present invention is not limited by the following Examples.

### Examples

### (Example 1)

A sodium compound, Na2CO3, was added to a Ni_{0.22}Cu_{0.11}Fe_{0.33}Mn_{0.33}(OH)₂ precursor (D50 = 4 µm) in an amount corresponding to Na/M (M = Ni + Cu + Fe + Mn) = 1.0 equivalent, and the mixture was heat-treated at 950°C (heating rate: 4°C/min) for 10 hours in an air atmosphere to prepare a composite transition metal oxide powder (Na[Ni_{0.22}Cu_{0.11}Fe_{0.33}Mn_{0.33}O₂] powder).

85 wt% of the prepared coated positive electrode active material, 10 wt% carbon black, and 5 wt% PVdF binder were dispersed in 30 g of N-methyl-2-pyrrolidone (NMP) to prepare a positive electrode slurry. The positive electrode slurry was uniformly coated onto an aluminum foil having a thickness of 15 µm and vacuum-dried at 135°C to prepare a positive electrode for a sodium secondary battery.

For the positive electrode, a sodium metal plate was used as a counter electrode, porous glass fiber (thickness: 200 µm) was used as a separator, and an electrolyte containing 1.0 M NaPF₆ in a mixed solvent of propylene carbonate and fluoroethylene carbonate at a volume ratio of 98:2 was used to prepare a sodium secondary battery (coin cell).

### (Comparative Example 1)

A positive electrode active material, a positive electrode, and a sodium secondary battery were prepared in the same manner as in Example 1, except that heat treatment was performed at 850°C.

### (Examples 2 and Comparative Examples 2 to 5)

Positive electrode active materials, positive electrodes, and sodium secondary batteries were prepared in the same manner as in Example 1, except that the transition metal compositions shown in Table 1 were used.

### Experimental Examples

### (Experimental Example 1: Evaluation of Capacity Characteristics According to Increase in Ni Content in Transition Metal)

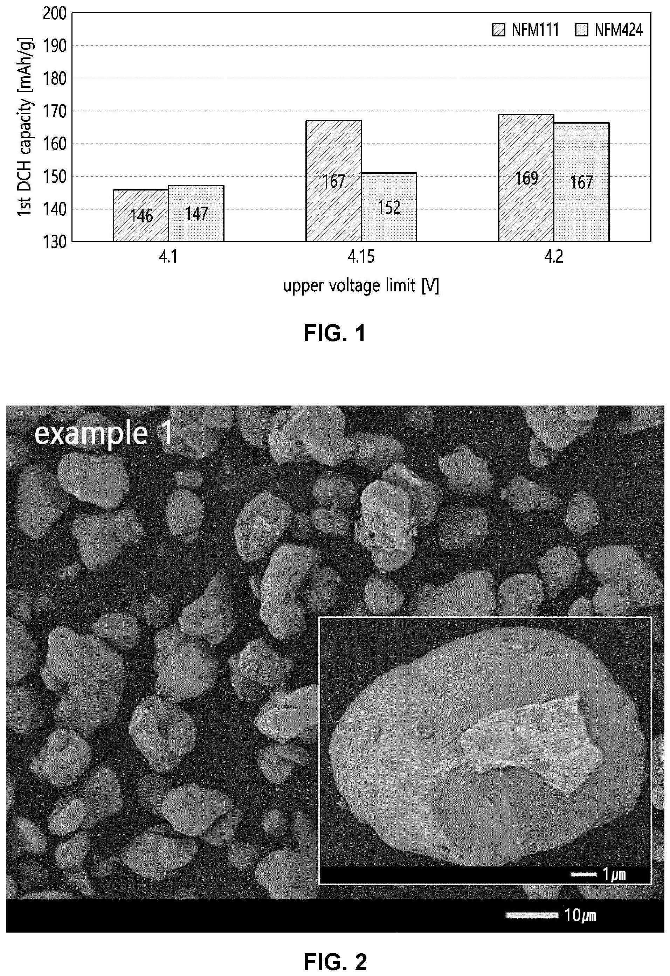

FIG. 1 shows results of comparative analysis of initial discharge capacities of sodium secondary batteries using an NFM111 positive electrode active material and an NFM424 positive electrode active material.

Specifically, a positive electrode and a sodium secondary battery were prepared using an NFM111 (NaNi_{0.33}Fe_{0.33}Mn_{0.33}O₂) positive electrode active material and an NFM424 (NaNi_{0.4}Fe_{0.2}Mn_{0.4}O₂) positive electrode active material, respectively.

For the prepared sodium secondary batteries, initial discharge capacities were measured through a charge/discharge experiment using an electrochemical analyzer (Toyo, Toscat-3100) at 25°C, a voltage range of 2.2 to 4.2 V, and a discharge rate of 0.1 C.

Conventionally, studies have been ongoing to improve capacity characteristics by increasing the Ni content in the transition metal composition in lithium-ion secondary batteries. However, in sodium-ion secondary batteries, as shown in FIG. 1, even when the Ni content was increased to 40 mol% (NFM424), no significant capacity difference was observed compared to the case of using a positive electrode active material having a composition with a Ni content of 33 mol%, and rather, a phenomenon in which life characteristics deteriorated could be confirmed. Conversely, when the Ni content was decreased to a level of 20 mol%, precursor synthesis was not easy because the Fe oxidation state was high due to a relatively high Fe content.

### (Experimental Example 2: Evaluation of Physical Properties of Positive Electrode Active Material)

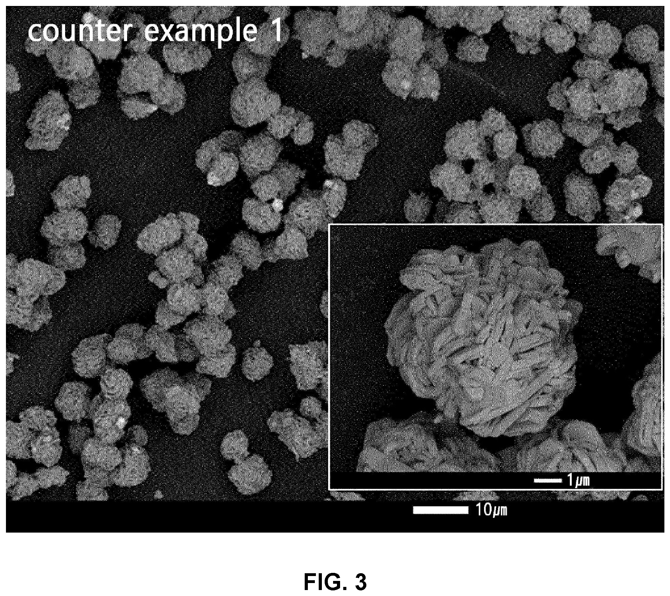

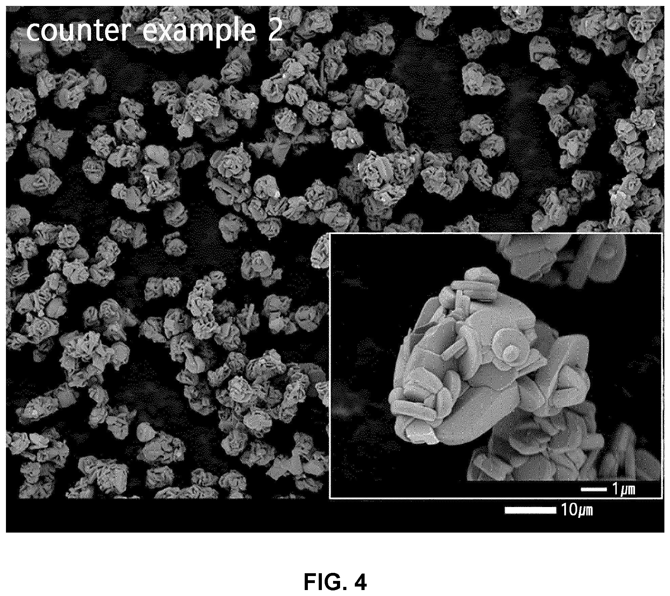

FIGS. 2 to 4 show SEM (Scanning Electron Microscopy) analysis results of positive electrode active materials according to Example 1 and Comparative Examples 1 and 2.

As shown in FIGS. 2 to 4, in Example 1, the positive electrode active material was synthesized as single crystals, whereas in Comparative Examples 1 and 2, it could be confirmed that the positive electrode active material was prepared in the form of secondary particles in which primary particles were aggregated due to a low heat-treatment temperature and a low Cu content.

In addition, for the positive electrode active materials prepared in Examples 1 to 2 and Comparative Examples 1 to 5, PD, volume change ratio (300 cycles), and average particle diameter (D50) were measured by the following methods, and a ratio D/C of the average particle diameter (D50) of single crystals to the copper content in the transition metal composition was calculated and summarized in Table 1 below.

### * Analysis of Particle Size Distribution of Positive Electrode Active Material

The particle size distribution of single crystals in the positive electrode active material was analyzed using a known laser diffraction method. Specifically, each positive electrode active material was dispersed in a dispersion medium, irradiated with ultrasonic waves at about 28 kHz and an output of 60 W using a laser diffraction particle size analyzer (Microtrac MT 3000), and a cumulative volume particle size distribution graph was obtained.

Thereafter, a particle size corresponding to 50% of the cumulative volume was calculated from the cumulative volume particle size distribution graph.

### * Method for Measuring PD (Press Density)

In a PD measurement apparatus, a positive electrode active material sample (3.00 g) was weighed, introduced into a mold, placed in a press apparatus, prepared in a pellet form by applying a force of 2.5 tons, and density was measured.

### * Method for Measuring Volume Change Ratio After 300 Cycles

Sodium secondary batteries prepared in Examples 1 to 2 and Comparative Examples 1 to 5 were fabricated in the form of small pouch cells (single-sheet cells), followed by a formation process (three charge/discharge cycles at 25°C, 1.5 V to 4.0 V, and 0.1 C/0.1 C).

After completion of the formation process, the single-sheet cells were degassed, and the initial cell volume was measured. Thereafter, 300 charge/discharge cycles were performed under charge/discharge conditions of 25°C, 1.5 V to 4.0 V, and 0.5 C/0.5 C, and the cell volume after 300 cycles was measured.

The specific gravity and volume were measured using an electronic densimeter manufactured by Alfa Mirage based on Archimedes' principle. Specifically, the weight in air and the weight in water were measured, and the specific gravity and volume were automatically calculated by the densimeter.

**[Table 1]**

| | Preparation Method | | Evaluation of Physical Properties of Positive Electrode Active Material | | | |
|---|---|---|---|---|---|---|
| | Heat Treatmen t Temperat ure (°C) | Transition Metal Composition Ni/Cu/Fe/Mn (Molar Ratio) | PD (g/cm3) | Volume Change Ratio (300cy)(%) | D50 (µm) | Relation Formula1 (D/C) |
| Comparat ive Example2 | 950 | 0.30/0.03/0.33/0. 33 | 2.79 | 7.3 | 6.9 | 2.30 |
| Example 2 | 950 | 0.26/0.07/0.33/0. 33 | 2.93 | 3.1 | 11.4 | 1.63 |
| Example 1 | 950 | 0.22/0.11/0.33/0. 33 | 2.96 | 2.9 | 12.6 | 1.15 |
| Comparat ive Example5 | 950 | 0.11/0.22/0.33/0. 33 | 2.95 | 2.8 | 12.2 | 0.55 |
| Comparat ive Example1 | 850 | 0.22/0.11/0.33/0. 33 | 2.78 | 8.2 | 8.2 | 0.75 |
| Comparat ive Example3 | 950 | 0.33/0.11/0.22/0. 33 | 2.80 | 5.7 | 8.5 | 0.77 |
| Comparat ive Example4 | 950 | 0.33/0.11/0.33/0. 22 | 2.79 | 6.1 | 7.8 | 0.71 |

Referring to Table 1, it was confirmed that, in Comparative Example 2, Example 2, Example 1, and Comparative Example 5, when the ratio of Cu was adjusted to a preferred range of 7 to 11 atomic mol% with the contents of Ni and Cu fixed, large-particle-diameter single crystals having an optimized particle size could be synthesized using a relatively small amount of Cu, and capacity loss caused by introduction of the Cu doping metal could be minimized. In Comparative Example 2, the Cu doping amount was insufficient, and thus it was difficult to increase the particle diameter of the single crystals. Conversely, in Comparative Example 5, the effect of increasing the particle diameter of the single crystals was not good relative to the Cu doping amount, and deterioration of capacity characteristics due to Ni loss is expected.

In Comparative Example 1, the same transition metal precursor composition as that of Example 1 was used. However, the heat-treatment temperature was excessively low, and thus large-particle single-crystallization did not proceed sufficiently.

In Comparative Examples 3 and 4, it was analyzed that when the contents of Fe and Mn were reduced and Cu was doped, the single crystals did not grow into large-particle crystals.

Additionally, the average particle diameter (D50) of the positive electrode active material (sodium composite transition metal oxide) was measured according to changes in the average particle diameter (D50) of the transition metal hydroxide precursor, and the results are shown in Table 2 below.

### (Examples 3-1 to 3-3)

The average particle diameter (D50) of the Ni_{0.22}Cu_{0.11}Fe_{0.33}Mn_{0.33}(OH)₂ precursor was applied as described in Table 2 below, and positive electrode active materials were prepared in the same manner as in Example 1.

**[Table 2]**

| | Precursor Average Particle Size (D50) P1(µm) | Positive Electrode Active Material Single-Crystal Average Particle Size (D50) P2(µm) | Relation Formula 2 (P2/P1) |
|---|---|---|---|
| Example 1 | 4 | 12.6 | 3.15 |
| Example 3-1 | 6 | 12.8 | 2.13 |
| Example 3-2 | 8 | 12.3 | 1.54 |
| Example 3-3 | 10 | 13.5 | 1.35 |

As shown in Table 2, it was confirmed that even when a small-particle-diameter precursor having a D50 of 4 µm was used, the positive electrode active material could be grown into a large-particle-diameter single-crystal morphology having a particle size of 12 to 13 µm. Specifically, in Examples 3-1 to 3-3, it was confirmed that large-particle-diameter single-crystal positive electrode active materials were prepared regardless of the average particle diameter when precursor particles having a preferred average particle diameter (D50) range of 4 to 7 µm were used.

However, referring to Example 3-3, when the average particle diameter of the precursor excessively increases to 10 µm or greater, a plurality of large-particle-diameter particles may aggregate, and a quasi-single-crystal morphology may appear. Therefore, controlling the average particle diameter (D50) of the precursor to a level of 4 to 7 µm is preferable in terms of improving single-crystallization and process efficiency.

### (Experimental Example 3: Evaluation of Electrochemical Performance of Sodium Secondary Batteries)

With respect to the sodium secondary batteries prepared in Examples 1 to 2 and Comparative Examples 1 to 5, initial charge capacity and initial discharge capacity were measured through charge/discharge testing using an electrochemical analyzer (Toyo, Toscat-3100) at 25°C, within a voltage range of 2.2 V to 4.0 V, and at a discharge rate of 0.1 C.

In addition, for the same sodium secondary batteries, charge/discharge cycling was performed from Cycle 1 to Cycle 50 under conditions of 0.5 C/0.5 C within an operating voltage range of 1.5 V to 4.0 V at 25°C, and a capacity retention value, defined as the ratio of the discharge capacity at Cycle 50 to the discharge capacity at Cycle 1, was measured.

**[Table 3]**

| | Preparation Method | | Evaluation of Electrochemical Performance (1.5-4.0V) | | | |
|---|---|---|---|---|---|---|
| | Heat Treatment Temper ature (°C) | Transition Metal Composition Ni/Cu/Fe/Mn(Molar Ratio) | Initial Capacity Characteristics (mAh/g) | | | Cycle Life Character istics (50cy)(%) |
| | | | Charge Capacity | Discharg e Capacity | Efficie ncy (%) | |
| Comparat ive Example 2 | 950 | 0.30/0.03/0.33/0.33 | 153.2 | 140.6 | 91.8 | 79.3 |
| Example 2 | 950 | 0.26/0.07/0.33/0.33 | 148.1 | 135.4 | 91.4 | 81.2 |
| Example 1 | 950 | 0.22/0.11/0.33/0.33 | 147.5 | 134.0 | 90.9 | 82.1 |
| Comparat ive Example 5 | 950 | 0.11/0.22/0.33/0.33 | 141.0 | 129.1 | 91.5 | 78.1 |
| Comparat ive Example 1 | 850 | 0.22/0.11/0.33/0.33 | 145.2 | 136.8 | 94.2 | 71.0 |
| Comparat ive Example 3 | 950 | 0.33/0.11/0.22/0.33 | 151.0 | 142.1 | 94.1 | 77.5 |
| Comparat ive Example 4 | 950 | 0.33/0.11/0.33/0.22 | 150.3 | 142.9 | 95.1 | 73.1 |

Referring to Table 3, it could be confirmed that, in Examples 1 and 2 corresponding to the present invention, capacity characteristics and life characteristics were improved as compared with Comparative Examples 1 to 5.

## Claims

1. A positive electrode active material for a sodium secondary battery, comprising:
a sodium composite transition metal oxide comprising sodium (Na) and transition metals comprising nickel (Ni), copper (Cu), M1, and M2,
wherein, in the sodium composite transition metal oxide, M1 and M2 are different metals and are manganese (Mn), iron (Fe), or cobalt (Co),
wherein the sodium composite transition metal oxide comprises single crystals and satisfies the following Relation Formula 1: [Relation Formula 1] $0.8 \leq D / C \left(μm/at mol%\right) \leq 1.6$
wherein, in Relation Formula 1, D is an average particle diameter (D50) of the single crystals, and C is a copper content (atomic mol%) based on total metals excluding sodium in the composite transition metal oxide.

2. The positive electrode active material for a sodium secondary battery of claim 1,
wherein the sodium composite transition metal oxide has an O3-type crystal structure,
wherein a total amount (M) of nickel (Ni) and copper (Cu) is 30 to 35 at mol% based on total metals excluding sodium, and
wherein a ratio (M1/M) of a content of M1 to the total amount (M) of nickel and copper and a ratio (M2/M) of a content of M2 to the total amount (M) of nickel and copper are each 0.85 to 1.20.

3. The positive electrode active material for a sodium secondary battery of claim 1,
wherein a total amount of nickel (Ni) and copper (Cu) is 30 to 35 at mol% based on total metals excluding sodium in the sodium composite transition metal oxide, and
wherein the copper is substituted into a transition metal layer, and a content of the copper is 10 to 35% based on a total amount of nickel and copper of 100 at mol%.

4. The positive electrode active material for a sodium secondary battery of claim 1,
wherein the sodium composite transition metal oxide comprises a compound represented by the following Chemical Formula 1:
[Chemical Formula 1] Naₐ(Ni_{x-b}Cu_{b}M1_{y}M2_{z}M3ᵥ)O₂
wherein, in Chemical Formula 1,
M1, M2, and M3 are different elements from one another,
M1 and M2 are each Fe, Mn, or Co,
M3 is at least one selected from the group consisting of Fe, Mn, Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd,
0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

5. The positive electrode active material for a sodium secondary battery of claim 1,
wherein the sodium composite transition metal oxide comprises a compound represented by the following Chemical Formula 2:
[Chemical Formula 2] Naₐ(Ni_{x-b}Cu_{b}Fe_{y}Mn_{z}M3ᵥ)O₂
wherein, in Chemical Formula 2,
M3 is at least one selected from the group consisting of Co, P, Sr, Ba, Ti, Zr, Al, W, Ce, Hf, Ta, Cr, F, Mg, V, Zn, Si, Y, Ga, Sn, Mo, Ge, Nd, B, Nb, and Gd,
0.80<a<1.20, 0.30≤x≤0.35, 0.05≤b≤0.15, 0.20<x-b<0.30, 0.30≤y≤0.35, 0.30≤z≤0.35, 0≤v≤0.10, and x+y+z+v=1.

6. The positive electrode active material for a sodium secondary battery of claim 1,
wherein the sodium composite transition metal oxide comprises single crystals having an average particle diameter (D50) of 9 to 15 µm.

7. The positive electrode active material for a sodium secondary battery of claim 1,
wherein the positive electrode active material has a press density (PD) of 2.85 to 3.05 g/cm³, and
wherein a volume change ratio after 300 charge/discharge cycles is less than 3.5%.

8. A method of preparing a positive electrode active material for a sodium secondary battery, comprising:
mixing a transition metal hydroxide precursor comprising nickel (Ni), copper (Cu), M1, and M2 with a sodium compound; and
heat-treating the mixture to prepare sodium composite transition metal oxide single crystals satisfying the following Relation Formula 1: [Relation Formula 1] $0.8 \leq D / C \left(μm/at mol%\right) \leq 1.6$
wherein, in Relation Formula 1, D is an average particle diameter (D50) of the single crystals, and C is a copper content (atomic mol%) based on total metals excluding sodium in the composite transition metal oxide.

9. The method of preparing a positive electrode active material for a sodium secondary battery of claim 8,
wherein the transition metal hydroxide precursor has an average particle diameter (D50) of 4 to 7 µm, and
wherein the heat-treating is performed to satisfy the following Relation Formula 2: [Relation Formula 2] $2 \leq P 2 / P 1 \leq 4$
wherein, in Relation Formula 2, P1 is an average particle diameter (D50) of the transition metal hydroxide precursor, and P2 is an average particle diameter (D50) of the sodium composite transition metal oxide.

10. The method of preparing a positive electrode active material for a sodium secondary battery of claim 8,
wherein the heat-treating comprises heat-treating the mixture at 900 to 1,000°C for 5 to 20 hours.

11. A positive electrode for a sodium secondary battery, comprising the positive electrode active material according to claim 1.

12. A sodium secondary battery using the positive electrode according to claim 11.
